# EUROPEAN PATENT APPLICATION

(11) **EP 2 492 500 A1**
(43) Date of publication of application: **29.08.2012**
(21) Application number: 11155944.9
(22) Date of filing: 25.02.2011
(51) Int. Cl.: F03D 7/04

(54) **Capacitance placement in wind farms**

(71) Applicant: SIEMENS AKTIENGESELLSCHAFT, 80333 München (DE)
(72) Inventor: Andresen, Björn, 8752, Ostbirk (DK); Kumar, Sathees, 7400, Herning (DK)

(57) **Abstract**

There is provided a wind farm capacitance determination device (100) for receiving a wind farm layout information (104) of a wind farm (300) and at least one optimization constraint (108) and comprising an optimization unit (105) for optimizing a cost by providing an optimized capacitance related parameter value set (110), the cost being determined by a cost function (112) which associates to each capacitance related parameter value set a cost value, the cost function (112) being based on the wind farm layout information (104) and the optimization taking the at least one optimization constraint (108) into account. In an embodiment the optimized capacitance related parameter value set (110) includes a location, a number and a size of capacitor banks (310) to be electrically connected to the wind farm (300).

## Description

### FIELD OF INVENTION

The present invention relates to the field of wind farms.

### BACKGROUND OF THE INVENTION

The output voltage of the wind farm may be varying, e.g. depending on a load in an electricity network to which the wind farm is connected.

Varying output voltage is sometimes undesirable.

In view of the above-described situation, there exists a need for an improved technique that enables to provide a wind farm, while substantially avoiding or at least reducing one or more of the above-identified problems.

### SUMMARY OF THE INVENTION

This need may be met by the subject matter according to the independent claims. Advantageous embodiments of the herein disclosed subject matter are described by the dependent claims.

According to a first aspect of the invention there is provided a wind farm capacitance determination device comprising an input unit for providing wind farm layout information for a wind farm; a constraint unit for providing at least one optimization constraint; and a optimization unit for optimizing a cost value by providing an optimized capacitance related parameter value set, the cost value being determined by a cost function which associates to each capacitance related parameter value set a cost value, the cost function being based on the wind farm layout information and the optimization taking the at least one optimization constraint into account.

This aspect of the invention is based on the idea that voltage variations of a wind farm can be mitigated by providing an appropriate capacitance which is in accordance with optimized values of a capacitance related parameter set.

In an embodiment, the capacitance related parameter value set includes a value of a single capacitance related parameter. In another embodiment, the capacitance related parameter value set includes a value for each of one or more capacitance related parameters, i.e. a value for each parameter of the capacitance related parameter set.

In a further embodiment, the optimization constraint is taken into account by the cost function. For example, in an embodiment the cost function is determined depending on the at least one optimization constraint.

In a further embodiment, the wind farm capacitance determination device further comprises a cost function determination unit being configured for (i) receiving the wind farm layout information and the at least one optimization constraint; and (ii) determining the cost function depending on the wind farm layout information and the at least one optimization constraint. For example, in an embodiment, the wind farm layout information is provided in an parameterized form wherein each parameter is associated with a respective term of the cost function, wherein the parameter value of a wind farm layout parameter is mapped to a parameter value of the respective term in the cost function. Such mapping may be performed by a predetermined function, just to name one example.

According to a further embodiment, the optimization unit comprises an iteration unit and a decision unit; wherein the iteration unit is configured for receiving a capacitance related parameter value set and is further configured for changing the capacitance related parameter value set in an iteration, thereby providing an altered capacitance related parameter value set; and wherein the decision unit is configured for deciding whether a cost value for the altered capacitance related parameter value set matches at least one target range and wherein the decision unit is further configured for providing, if altered capacitance related parameter value set does not match the at least one target condition, the altered capacitance related parameter value set to the iteration unit for a further changing the altered capacitance related parameter value set in a further iteration.

According to further embodiment, the decision unit is further configured for providing the altered capacitance related parameter set to the iteration unit to further change the altered capacitance related parameter set in a further iteration if altered capacitance related parameter set does not match the at least one target condition. For example, the iteration may be repeated until the respectively obtained altered capacitance related parameter set matches the at least one target condition. According to another embodiment, the iteration is repeated carried out until a local or global extrema, e.g. a local minimum or a global minimum of the cost is determined. In such a case, no target condition has to be specified.

Embodiments of the herein disclosed subject matter define a target condition and/or an optimization constraint. It should be noted, that in accordance with respective embodiment, any specific target condition may be also be used as a optimization constraint and vice versa. For example, according to an embodiment, the at least one target condition includes a power loss condition. Hence with the above rule it follows that in a further embodiment, the at least one optimization constraint includes a power loss condition.

According to an embodiment, a power loss condition is an upper boundary for the total active power loss in the wind farm. According to a further embodiment, a power loss condition is an upper boundary for the total reactive power loss in the wind farm.

According to a further embodiment, the at least one target condition includes a voltage profile, harmonics mitigation, etc.

According to a further embodiment, the cost function includes a set of equations. For example, in an embodiment a cost function generated depending on the wind farm layout information and the at least one optimization constraint typically is a set of nonlinear equations.

According to a further embodiment, the capacitance related parameter set includes the location of at least one capacitance. For example, in an embodiment the location of the at least one capacitance is specified in terms of the bus bar at which the capacitance should be located in an optimized wind farm

According to a further embodiment, the capacitance related parameter set includes a number of capacitances. Hence, in an embodiment not only the location of the at least one capacitance is determined according to embodiments of the herein disclosed subject matter, but also the number of such capacitances to be employed for optimized cost.

According to a further embodiment, the capacitance related parameter set includes a capacitance value of a capacitance. For example, in an embodiment, the capacitance values of two or more capacitances differ from each other.

According to an embodiment, a capacitance as mentioned above is a capacitor bank.

According to an embodiment, the wind farm layout information includes a cable length. For example, in an embodiment, the wind farm information may include the total cable length in the wind farm. However as cables contribute to losses, according to an embodiment cable lengths of portions of the cables in the wind farm are provided as wind farm layout information.

According to an embodiment, the cost includes a power loss of the wind farm. In a further embodiment, the cost includes at least two cost elements. For example, one cost element may be a power loss and another cost element may be intensity of harmonics. For example, in an embodiment the cost may be the higher the power loss is. Further, the cost may be the higher, the higher the intensity of the harmonics is.

According to an embodiment, the input unit and/or the constraint unit includes a user interface for allowing a user to input the wind farm layout information and/or the at least one optimization constraint. According to a further embodiment, the input unit and/or the constraint unit includes a storage for storing the wind farm layout information and/or the at least one optimization constraint.

According to a second aspect of the herein disclosed subject matter method is provided, the method comprising: receiving wind farm layout information for a wind farm; receiving at least one optimization constraint; and optimizing a cost by providing an optimized capacitance related parameter value set, wherein the cost is determined by a cost function which associates to each capacitance related parameter value set a cost value, wherein the cost function is based on the wind farm layout information and the optimization takes the at least one optimization constraint into account.

According to an embodiment of the second aspect, the method further comprises receiving the wind farm layout information and the at least one optimization constraint; and determining the cost function depending on the wind farm layout information.

Generally herein, respective embodiments of the second aspect may include one or more feature and/or function as described with regard to the first aspect. In such cases, the device features described with regard to the first aspect should not be considered as limiting the method claim. Rather, at least when referring to features disclosed with regard to a device, it is noted that such a device disclosure implicitly discloses the respective function or the respective method features independent from the device features.

Hence, in an embodiment of the second aspect, the method is configured in accordance with the first aspect or an embodiment thereof.

According to a third aspect of the herein disclosed subject matter, a wind farm is provided, the wind farm comprising at least one wind turbine device and a capacitance in accordance with an optimized capacitance related parameter value set determined according to the method according to the second aspect or an embodiment thereof.

According to a fourth aspect of the herein disclosed subject matter, a computer program is provided, the computer program being adapted for, when being executed by a data processor, controlling the method as set forth in the second aspect or an embodiment thereof.

As used herein, reference to a computer program is intended to be equivalent to a reference to a program element and/or a computer readable medium containing instructions for controlling a computer system to coordinate the performance of the above described method.

The computer program may be implemented as computer readable instruction code by use of any suitable programming language, such as, for example, JAVA, C++, and may be stored on a computer-readable medium (removable disk, volatile or nonvolatile memory, embedded memory/processor, etc.). The instruction code is operable to program a computer or any other programmable device to carry out the intended functions. The computer program may be available from a network, such as the World Wide Web, from which it may be downloaded.

The invention may be realized by means of a computer program respectively software. However, the invention may also be realized by means of one or more specific electronic circuits respectively hardware. Furthermore, the invention may also be realized in a hybrid form, i.e. in a combination of software modules and hardware modules.

In the above there have been described and in the following there will be described exemplary embodiments of the subject matter disclosed herein with reference to a wind farm capacitance determination device and a respective method. It has to be pointed out that of course any combination of features relating to different aspects of the herein disclosed subject matter is also possible. In particular, some embodiments have been or will be described with reference to apparatus type claims whereas other embodiments have been or will be described with reference to method type claims. However, a person skilled in the art will gather from the above and the following description that, unless other notified, in addition to any combination of features belonging to one aspect also any combination between features relating to different aspects or embodiments, for example even between features of the apparatus type embodiments and features of the method type embodiments is considered to be disclosed with this application.

The aspects and embodiments defined above and further aspects and embodiments of the present invention are apparent from the examples to be described hereinafter and are explained with reference to the drawings, but to which the invention is not limited.

### BRIEF DESCRIPTION OF THE DRAWINGS

Fig. 1 shows a wind farm capacitance determination device in accordance with embodiments of the herein disclosed subject matter.

Fig. 2 illustrates a method of optimized capacitor placement in accordance with embodiments of the herein disclosed subject matter.

Fig. 3 shows a wind farm in accordance with embodiments of the herein disclosed subject matter.

### DETAILED DESCRIPTION

The illustration in the drawings is schematic. It is noted that in different figures, similar or identical elements are provided with the same reference signs.

In cases where one or more capacitor banks for stabilizing the voltage are to be installed in a wind farm, optimal capacitor placement should then be considered. In accordance with embodiments of the herein disclosed subject matter this can be implemented by having a set of genetic algorithms (GA), or by constrained optimization algorithms if needed. These algorithms will result in the optimal placement of at least one capacitor to be installed. Such algorithms may be implemented in a wind farm capacitance determination device according to the herein disclosed subject matter.

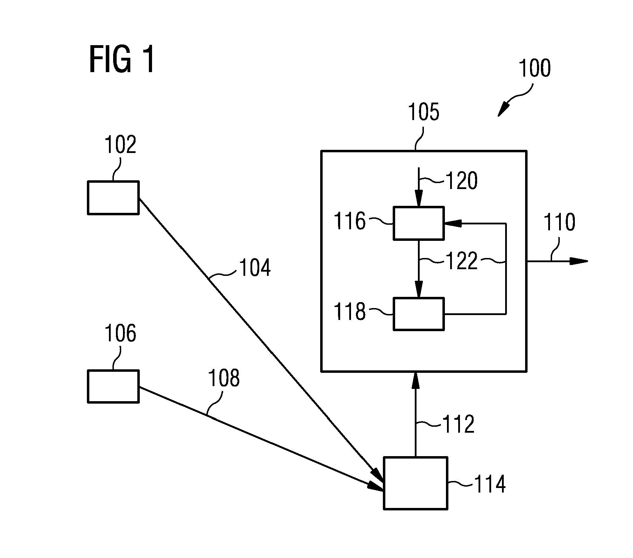

Fig. 1 shows a wind farm capacitance determination device 100 in accordance with embodiments of the herein disclosed subject matter.

The wind farm capacitance determination device 100, referred to as device 100 in the following, comprises an input unit 102 for providing wind farm layout information 104 of a wind farm (not shown in Fig. 1). Further, the device 100 comprises a constraint unit 106 for providing at least one optimization constraint 108 which is taken into account in the optimization performed by the optimization unit 105. Further, the optimization unit 105 is configured for optimizing a cost by providing an optimized capacitance related parameter value set 110. The cost is determined by a cost function 112 which associates to a capacitance related parameter value set a cost value. The cost function 110 is based on the wind farm layout information 104 and the optimization takes the at least one optimization constraint 108 into account.

In accordance with an embodiment, the device 100 further comprises a cost function determination unit 114 for providing the cost function 112 to the optimization unit 105. According to an embodiment, the cost function determination unit 114 is configured for receiving the wind farm layout information 104 and the at least one optimization constraint 108 and provides in response hereto the cost function 112.

According to an alternative embodiment, not shown in Fig. 1, the constraint unit 106 is configured for providing at least one optimization constraint 108 to the optimization unit 105. In such an embodiment, the optimization unit 105 is configured for receiving the wind farm layout information 104 and the optimization constraint 105.

According to an embodiment, the optimization unit 105 comprising an iteration unit 116 and a decision unit 118. The iteration unit 106 is configured for receiving a starting capacitance related parameter value set 120 and changing the starting capacitance related parameter value set 120 in an iteration, thereby providing an altered capacitance related parameter value set 122. The decision unit 118 is configured for deciding whether a cost value for the altered capacitance related parameter value set 122 matches at least one target range. Further, the decision unit 118 is further configured for providing, if altered capacitance related parameter value set 122 does not match the at least one target condition, the altered capacitance related parameter value set 122 to the iteration unit 116 as a new starting capacitance related parameter value set for a further changing the altered capacitance related parameter value set 122 in a further iteration. After one or more iterations, if the altered capacitance related parameter value set 122 matches the at least one target condition, the altered capacitance related parameter value set 122 is provided as the optimized capacitance related parameter value set 110 at an output of the optimization unit 105.

In accordance with an embodiment, the cost function is provided based on one or more of the following optimization constraints:
A) According to an embodiment, it is assumed that system, i.e. the wind farm, is balanced.
B) In accordance with a further embodiment, capacitor size and cost is considered. For example, in an embodiment, only the smallest standard size of capacitors and multiples of this standard size are allowed to be placed in the wind farm, e.g. at the buses. This may allow for a more realistic optimal solution.
C) In accordance with an embodiment, an optimization constraint is to reduce power loss in the wind farm. For example, in an embodiment a capacitance related parameter value set which provides a power loss reduction compared to another capacitance related parameter value set is awarded with lower cost.
D) In accordance with an embodiment, an optimization constraint is a defined range for a voltage profile of an output voltage of the wind farm.
E) In accordance with an embodiment, an optimization constraint is a defined range for a total harmonic distortion of the output voltage of the wind farm.

Determining the cost function reveals the optimal place/size for the capacitor when solved. An overall goal of embodiments of the herein disclosed subject matter is to implement an algorithm/code which is able to take necessary input from a wind farm and capacitor data and provide the size/location of the capacitor. According to other embodiments, other input data is used.

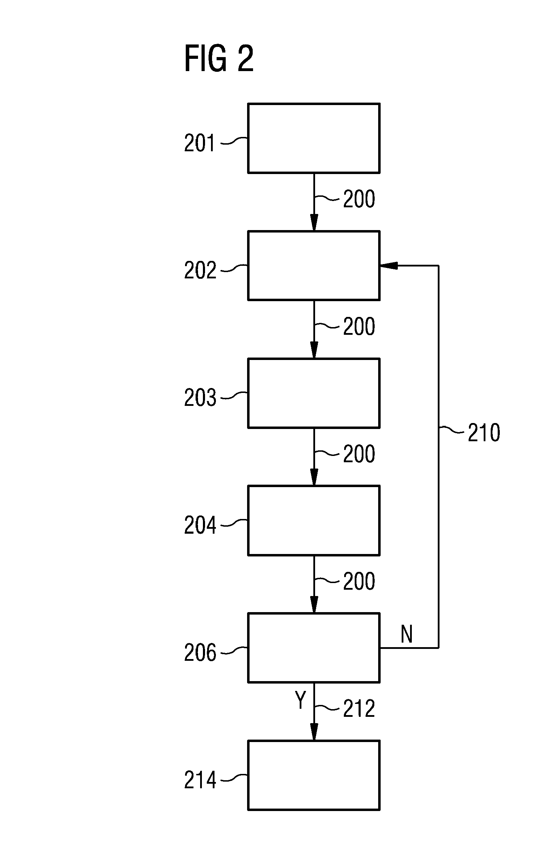

Fig. 2 illustrates a method of optimized capacitor placement in accordance with embodiments of the herein disclosed subject matter. Arrows 200 are used to indicate the sequence of the individual actions.

The procedure for optimal capacitor placement starts with an initialization 201 where data describing the layout details, i.e. wind farm layout information, of the wind farm is provided. The wind farm layout information includes one or more of a number of radials, impedance data for one or more transformers and/or transmission lines, and a load flow analysis. Herein, a radial is a busbar to which a single or several wind turbines are connected.

Next, indicated at 202 in Fig. 2, the constraints for the optimization are defined. A single constraint or several constraints might come into play here. The constraints could be requirements for the total active power loss in the wind farm, reactive power loss in the wind farm, voltage profile, harmonics mitigation and etc.

Once the constraints are well determined the cost function is ready to be determined. Determination of the cost function is indicated at 203 in Fig. 2. The cost function is typically a set of nonlinear equations which are to be solved, e.g. numerically.

The solution is found by iterative steps. An iteration, i.e. changing the capacitance related parameter value set is indicated at 204.

At 206 the output of the iteration 204, e.g. the altered capacitance related parameter value set as discussed with regard to Fig. 1, is the compared to a target condition, e.g. pre-determined constraints. For example, in an embodiment it is checked whether the output of the iteration 204 is within pre-determined limits.

If not, indicated at 210 and the "N" in Fig.2, then the iteration has to be done again. For example, in an embodiment the actions 202 to 206 are repeatedly performed. If the solution is then in accordance with the target condition, indicated at 212 and the "Y" in Fig.2, in accordance with an embodiment the number of capacitor banks, placement (e.g. at which bus bar) of capacitor banks and the proper size of the capacitor banks is provided, indicated at 214. It should be understood that the number of capacitor banks, placement of capacitor banks and the proper size of the capacitor banks are defined by the output of the last iteration 204 (e.g. by the altered capacitance related parameter value set).

In the following, an exemplary application of the herein disclosed teachings to a wind farm is provided.

Some wind farms are connected to weak grids where the voltage easily drops and rises due to external conditions. To prevent the voltage collapse and large voltage drops, in accordance with an embodiment at least one capacitor bank is installed in the wind farm to boost up the voltage.

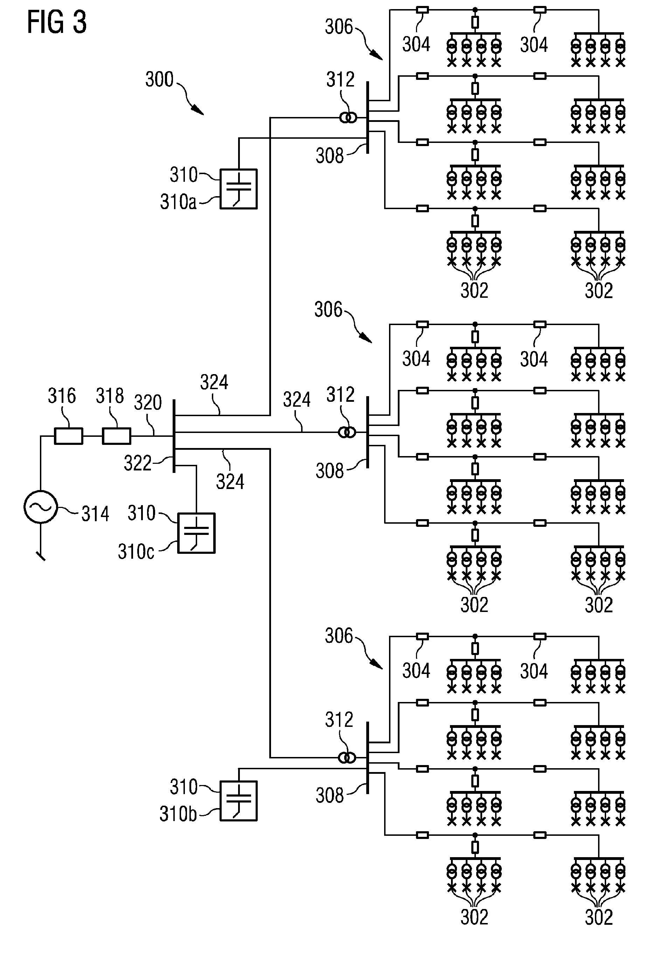

Fig. 3 shows a wind farm 300 in accordance with embodiments of the herein disclosed subject matter.

The wind farm 300 comprises at least one wind turbine device, e.g. a plurality of wind turbine devices, some of which are indicated at 302. Some of the cable resistances are indicated at 304 in Fig. 3. According to an embodiment, the wind farm comprises two or more substations 306, three of which are shown in Fig. 3. The wind turbine devices 302 of each substation 306 are coupled to a point of common coupling 308, also referred to as PCC1, PCC2, PCC3 for the individual substations 306. The point of common coupling 308 may be realized by an respective bus bar.

Further, the wind farm 300 comprises a capacitance 310 in accordance with an optimized capacitance related parameter value set determined according to a method as disclosed herein. In Fig. 3, several possible places for the capacitance 310 are shown. For example, in an embodiment, the optimum location of the capacitance 310 is obtained by a direct electrical connection to a point of common coupling 308 of a substation 306. Two such possible locations are shown in Fig. 3, wherein the respective capacitances are further indicated at 310a and 310b.

The wind farm 300 further comprises substation transformers 312 which transform the substation voltage (medium voltage which may be e.g. 35 kilovolts (kV)) to a high voltage supplied to the grid, indicated at 314 in Fig. 3. Grid impedance is indicated at 316 and the impedance of a transmission line 318 to the grid is indicated at 320 in Fig. 3. The high voltage side of each substation transformer 312 is coupled to a bus bar 322 which connects each substation transformer 312 of the wind farm 300 to the transmission line 320 to the grid 314. Electrical connections between the substation transformers 312 and the bus bar 322 are indicated at 324 in Fig. 3.

In accordance with an embodiment, the capacitance 310 may also be connected to the bus bar 322, i.e. to the wind farm power output. This capacitance is further indicated at 310c. It should be understood that in accordance with embodiments of the herein disclosed subject matter, only one of the capacitances 310a, 310b, 310c may be provided. Further, according to other embodiments, two or more of the capacitances 310a, 310b, 310c may be provided. In accordance with an embodiment, each capacitance 310a, 310b, 310c is formed by a capacitor bank.

It should be emphasized that not only the way of how the location and the properties of the capacitances 310a, 310b, 310c are determined is considered to be in accordance with aspects and embodiments of the herein disclosed subject matter but also the fact that a capacitance 310a, 310b, 310c is provided in the wind farm is an aspect of the herein disclosed subject matter.

It should be understood that generally herein a "location of a capacitance" refers to an electrical connection of the capacitance to a specific point in the wind farm, e.g. to the point of common coupling 308 of a substation 306.

According to embodiments of the invention, any suitable entity (e.g. components, units and devices) disclosed herein, e.g. the input unit, the constraint unit, the optimization unit or the cost function determination unit are at least in part provided in the form of respective computer programs which enable a processor device to provide the functionality of the respective entities as disclosed herein. According to other embodiments, any suitable entity disclosed herein may be provided in hardware. According to other - hybrid - embodiments, some entities may be provided in software while other entities are provided in hardware.

It should be noted that any entity disclosed herein (e.g. components, units and devices) are not limited to a dedicated entity as described in some embodiments. Rather, the herein disclosed subject matter may be implemented in various ways and with various granularity on device level or software module level while still providing the desired functionality. Further, it should be noted that according to embodiments a separate entity (e.g. a software module, a hardware module or a hybrid module) may be provided for each of the functions disclosed herein. According to other embodiments, an entity (e.g. a software module, a hardware module or a hybrid module (combined software/hardware module)) is configured for providing two or more functions as disclosed herein. According to an embodiment, the wind farm capacitance determination device comprises a processor device including at least two processors for carrying out at least one computer program corresponding to a respective software module.

Generally herein, a "set" may include a single element or two or more elements. For example, a capacitance related parameter set consists in one embodiment of a single capacitance related parameter and consists in another embodiment of two or more capacitance related parameters.

It should be noted that the term "comprising" does not exclude other elements or steps and the "a" or "an" does not exclude a plurality. For example, generally herein the wording "a cost function which associates to a capacitance related parameter value set a cost value" includes, in an embodiment, "a cost function which associates to a capacitance related parameter value set a single cost value" and, in another embodiment, "a cost function which associates to a capacitance related parameter value set a cost value set, wherein the cost value set includes one, two or more cost values". It should be understood that the number of elements of the capacitance related parameter value set does not necessarily correspond to the number of elements of the cost value set. Rather, the number of elements of both sets will usually differ from each other.

Also elements described in association with different embodiments may be combined. It should also be noted that reference signs in the claims should not be construed as limiting the scope of the claims.

In order to recapitulate the above described embodiments of the present invention one can state:
There is provided a wind farm capacitance determination device for receiving a wind farm layout information of a wind farm and at least one optimization constraint and comprising an optimization unit for optimizing a cost by providing an optimized capacitance related parameter value set, the cost being determined by a cost function which associates to each capacitance related parameter value set a cost value, the cost function being based on the wind farm layout information and the optimization taking the at least one optimization constraint into account. In an embodiment the optimized capacitance related parameter value set includes a location, a number and a size of capacitor banks to be electrically connected to the wind farm.

In accordance with further embodiments of the herein disclosed subject matter, wind farm layout data like cable lengths, bus bar data and data regarding the grid (whether it is stiff or weak) are determined and provided to the optimization unit. Determination may involve manual action and providing the data may include storing the data on a storage device. The collected data is processed by the algorithm as disclosed herein and produces a result.

In accordance with embodiments, the objective of finding the optimal place for the capacitance is the following:
- Reducing overall active power loss, while voltage profile is kept with specified range
- Saving installation and operation costs
- Increased annual savings during planning period
- Better voltage profile

## Claims

1. Wind farm capacitance determination device (100) comprising:
- an input unit (102) for providing wind farm layout information (104) of a wind farm (300);
- a constraint unit (106) for providing at least one optimization constraint (108); and
- and a optimization unit (105) for optimizing a cost by providing an optimized capacitance related parameter value set (110), the cost being determined by a cost function (112) which associates to each capacitance related parameter value set a cost value, the cost function (112) being based on the wind farm layout information (104) and the optimization taking the at least one optimization constraint into account (108).

2. Device according to claim 1, further comprising
- a cost function determination unit (114) being configured for
o receiving the wind farm layout information (104) and the at least one optimization constraint (108); and
o determining the cost function (112) depending on the wind farm layout information (104).

3. Device according to one of the preceding claims,
- the optimization unit (105) comprising an iteration unit (116) and a decision unit (118);
- the iteration unit (116) being configured for receiving a capacitance related parameter value set (120) and being further configured for changing the capacitance related parameter value set (120) in an iteration, thereby providing an altered capacitance related parameter value set (122); and
- the decision unit (118) being configured for deciding whether a cost value for the altered capacitance related parameter value set (122) matches at least one target condition and being further configured for providing, if altered capacitance related parameter value set (122) does not match the at least one target condition, the altered capacitance related parameter value set (122) to the iteration unit (116) for further changing the altered capacitance related parameter value set (122) in a further iteration.

4. Device according to claim 3, wherein the at least one target condition includes a power loss condition.

5. Device according to one of the preceding claims, wherein the cost function includes a set of equations.

6. Device according to one of the preceding claims, wherein the capacitance related parameter set (110, 120, 122) includes the location of at least one capacitance (310).

7. Device according to one of the preceding claims, wherein the capacitance related parameter set (110, 120, 122) includes a number of capacitances (310).

8. Device according to one of the preceding claims, wherein the capacitance related parameter set includes (110, 120, 122) a value of a capacitance (310).

9. Device according to one of claims 6 to 8, wherein the capacitance (310) is a capacitor bank.

10. Device according to one of the preceding claims, wherein the wind farm layout information (104) includes a cable length.

11. Device according to one of the preceding claims, wherein the cost includes at least two cost elements.

12. Device according to one of the preceding claims, wherein the cost includes a power loss of the wind farm.

13. Method comprising:
- receiving (201) wind farm layout information (104) of a wind farm (300);
- receiving (202) at least one optimization constraint (108);
- optimizing (203, 204, 206, 210, 212, 214) a cost by providing an optimized capacitance related parameter value set (110), the cost being determined by a cost function (112) which associates to each capacitance related parameter value set a cost value, the cost function (112) being based on the wind farm layout information (104) and the optimization taking the at least one optimization constraint (108) into account.

14. A computer program, the computer program being adapted for, when being executed by a data processor, controlling the method as set forth in claims 13.

15. Wind farm (300) comprising:
- at least one wind turbine device (302);
- a capacitance (310) in accordance with an optimized capacitance related parameter value set determined according to the method of claim 13.
